# EUROPÄISCHE PATENTSCHRIFT

(11) **EP 4 554 856 B1**
(45) Veröffentlichungstag und Bekanntmachung des Hinweises auf die Patenterteilung: **25.11.2026**
(21) Anmeldenummer: 23748221.1
(22) Anmeldetag: 12.07.2023
(51) Int. Cl.: B64D 11/00, B64D 11/06, B60N 2/02

(54) **FLUGZEUGSITZSTEUEREINHEIT**
AIRCRAFT SEAT CONTROL UNIT
UNITÉ DE COMMANDE DE SIÈGE D'AÉRONEF

(30) Priorität: 14.07.2022 DE 102022117644
(43) Veröffentlichungstag der Anmeldung: 21.05.2025
(73) Patentinhaber: Recaro Aircraft Seating GmbH & Co. KG, 74523 Schwäbisch Hall (DE)
(72) Erfinder: KAUFMANN, Christopher, 74424 Bühlertann (DE); MEHMEL, Jürgen, 74523 Schwäbisch Hall (DE); LAUBENBERGER, Jörg, 71540 Murrhardt (DE); STRECKERT, Michael, 74523 Schwäbisch Hall (DE)
(74) Vertreter: Daub, Thomas
(86) Internationale Anmeldenummer: PCT/EP2023/069303
(87) Internationale Veröffentlichungsnummer: WO 2024/013223

(56) Entgegenhaltungen:
- WO-A1-2021/165324
- DE-A1- 102011 118 754
- US-A1- 2020 339 266

## Beschreibung

### Stand der Technik

Die Erfindung betrifft eine Flugzeugsitzsteuereinheit nach dem Oberbegriff des Patentanspruchs 1.

Es ist bereits eine Flugzeugsitzsteuereinheit für einen Flugzeugsitz, mit einer Funktionsschaltkreiseinheit, die zumindest einen Funktionsschaltkreis zur Steuerung des Flugzeugsitzes aufweist, und mit einer Kommunikationsschaltkreiseinheit, die zumindest einen Kommunikationsschaltkreis aufweist und zur Kommunikation mit zumindest einer externen Steuereinheit vorgesehen ist, vorgeschlagen worden.

Die Druckschrift US 2020/339266 A1 offenbart ein System zur Verwendung eines PEDs, also beispielsweise eines Smartphones eines Passagiers zur Steuerung eines Flugzeugsitzes, wobei das PED über eine drahtlose Verbindung, beispielsweise über eine Bluetooth-Verbindung mit dem Flugzeugsitz, insbesondere mit dessen Steuereinheit gekoppelt werden kann, wobei die Steuereinheit des Flugzeugsitzes eine Signalstärke des Signals, das von dem PED über die drahtlose Verbindung empfangen wird, überwacht, wobei durch die Überwachung der Signalstärke die Steuereinheit ermitteln kann, ob sich ein Passagier in Sichtweite oder außerhalb der Sichtweite des Passagiersitzes befindet, um gegebenenfalls einen Steuerung des Flugzeugsitzes mittels des PEDs zu unterbinden.

Die Druckschrift WO 2021/165324 A1 offenbart ein System zur Steuerung eines Flugzeugsitzes und seiner Umgebung, das eine elektronische Steuereinheit aufweist, mittels der die elektrischen Bauteile des Flugzeugsitzes angesteuert werden können, wobei das System ein PED eines Passagiers umfasst, das über ein kabelloses Kommunikationsmodul einer Sitzsteuereinheit kommunizieren kann, wobei der Passagier über ein entsprechendes Interface auf dem PED den Flugzeugsitz steuern kann.

Die Aufgabe der Erfindung besteht insbesondere darin, eine gattungsgemäße Vorrichtung mit verbesserten Eigenschaften hinsichtlich einer Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzsteuereinheit für einen Flugzeugsitz, mit einer Funktionsschaltkreiseinheit, die zumindest einen Funktionsschaltkreis zur Steuerung des Flugzeugsitzes aufweist, und mit einer Kommunikationsschaltkreiseinheit, die zumindest einen Kommunikationsschaltkreis aufweist und zur Kommunikation mit zumindest einer externen Steuereinheit vorgesehen ist.

Es wird vorgeschlagen, dass die Kommunikationsschaltkreiseinheit zumindest softwaretechnisch getrennt von der Funktionsschaltkreiseinheit ausgebildet ist, und die Funktionsschaltkreiseinheit dazu vorgesehen ist, die Kommunikationsschaltkreiseinheit zu überwachen. Unter einer "Flugzeugsitzsteuereinheit" soll eine Steuereinheit verstanden werden, die zur Steuerung eines Flugzeugsitzes vorgesehen ist, wobei Eingaben zur Steuerung des Flugzeugsitzes von einem Passagier oder einem Personal vorgenommen werden können. Unter einer "Steuerung des Flugzeugsitzes" soll vorzugsweise eine Ansteuerung und Betätigung von elektrischen und/oder elektronischen Komponenten des Flugzeugsitzes, wie beispielsweise Aktuatoren, Bildschirmen oder anderen, dem Fachmann als sinnvoll erscheinenden Komponenten, verstanden werden. Unter einer Steuerung des Flugzeugsitzes sollen beispielsweise eine Steuerung einer Beleuchtung des Flugzeugsitzes, eine Steuerung einer Massageeinheit des Flugzeugsitzes, eine Steuerung der Sitzheizung des Flugzeugsitzes, eine Steuerung einer Türverriegelung für eine Tür, die einen Sitzbereich des Flugzeugsitzes von einem Kabinengang abtrennt, eine Steuerung eines Sichtschutzelements und/oder die Verfahrung, Steuerung, und/oder Überwachung von weiteren Sitzkomponenten verstanden werden. Unter einem "Flugzeugsitz" soll dabei ein Sitz, insbesondere ein Fluggastsitz, verstanden werden, der in einer Flugzeugkabine angeordnet ist und dabei vorzugsweise auf einem Kabinenboden der Flugzeugkabine aufgeständert ist. Der Flugzeugsitz stellt einem Passagier während eines Fluges einen Sitzplatz bereit. Unter einer "Funktionsschaltkreiseinheit" soll vorzugsweise eine Einheit verstanden werden, die zumindest einen elektronischen Funktionsschaltkreis aufweist, wobei jeder Funktionsschaltkreis der Funktionsschaltkreiseinheit vorzugsweise eine spezielle Funktionalität aufweist, wobei es grundsätzlich auch möglich ist, dass eine Funktionalität auf mehrere Funktionsschaltkreise verteilt ist. Unter einem "Funktionsschaltkreis" soll dabei insbesondere ein Schaltkreis verstanden werden, der zur Steuerung einer bestimmten Funktion oder eines bestimmten Funktionsspektrums des Flugzeugsitzes vorgesehen ist. Die Funktionsschaltkreise weisen jeweils zumindest einen Computerchip auf. Die Funktionsschaltkreiseinheit ist dazu vorgesehen, ein Betriebsprogramm auszuführen, das zu einer Steuerung des Flugzeugsitzes vorgesehen ist. Auf der Funktionsschaltkreiseinheit bzw. auf den Funktionsschaltkreisen wird ein Betriebsprogramm zur Steuerung des Flugzeugsitzes betrieben, das entsprechende Steuerungssignale an die zu steuernden Elemente des Flugzeugsitzes ausgibt. Unter einer "Kommunikationsschaltkreiseinheit" soll eine Schaltkreiseinheit verstanden werden, die zumindest einen Kommunikationsschaltkreis aufweist, der dazu vorgesehen ist, eine Verbindung zu einer externen Steuereinheit aufzunehmen, Steuersignale zu empfangen und diese an die Funktionsschaltkreiseinheit weiterzuleiten. Der zumindest eine Kommunikationsschaltkreis der Kommunikationsschaltkreiseinheit ist vorzugsweise sowohl zu einer drahtlosen Kommunikation als auch zu einer drahtgebundenen Kommunikation mit einer externen Steuereinheit vorgesehen.

Unter einer "externen Steuereinheit" soll eine von dem Flugzeugsitz getrennte Einheit verstanden werden, wie insbesondere ein Tablet, ein Smartphone, oder ein anderes Eingabegerät, das von dem Flugzeugsitz getrennt ausgebildet ist, wobei die externe Steuereinheit auch Teil der Flugzeugkabine oder eines Flugzeugsitzbereichs sein kann. Unter einer externen Steuereinheit sollen vorzugsweise auch Steuer- oder Eingabegeräte verstanden werden, die Teil der Flugzeugkabine oder des Flugzeugsitzbereichs sind, wie beispielsweise Eingabegeräte für Bordpersonal, oder Eingabegeräte für das Inflight-Entertainmentsystem (IFE), zu denen auch in dem Flugzeugsitzbereich angeordnete Touchscreens zählen. Unter "softwaretechnisch getrennt" soll verstanden werden, dass jeweils unterschiedliche Betriebsprogramme auf den getrennt ausgebildeten Schaltkreiseinheiten betrieben werden. Auf den beiden softwaretechnisch getrennt ausgebildeten Schaltkreiseinheiten werden während eines Betriebs jeweils voneinander unabhängige Betriebsprogramme ausgeführt. Die softwaretechnisch getrennt ausgebildeten Schaltkreiseinheiten sind dazu vorgesehen, dass jeweils eigenständige, voneinander unabhängige Betriebsprogramme auf ihnen betrieben werden. Darunter, dass der Funktionsschaltkreis den Kommunikationsschaltkreis überwacht soll verstanden werden, dass der Funktionsschaltkreis überwacht, ob das auf dem Kommunikationsschaltkreis laufende Betriebsprogramm fehlerfrei läuft. Insbesondere ist der Funktionsschaltkreis dazu vorgesehen, Manipulationen und/oder Fehler in dem auf dem Kommunikationsschaltkreis laufenden Betriebsprogramm zu detektieren. Unter "Manipulationen" sollen vorzugsweise unberechtigte Zugriffsversuche von einem externen Gerät oder durch auf dem Kommunikationsschaltkreis laufender Schadsoftware verstanden werden. Das auf der Funktionsschaltkreiseinheit betriebene Betriebsprogramm ist vorzugsweise als ein bezüglich der Zulassungsanforderungen (beispielsweise EASA CS-25) vertrauenswürdiges ("trusted") Betriebsprogramm ausgebildet, das einen sicheren Bereich darstellt und komplett überwacht ist. Das auf der Funktionsschaltkreiseinheit betriebene Betriebsprogramm ist vorzugsweise nach der DAL D entsprechend der Spezifikation RTCA DO 178 zertifiziert. Das auf der Kommunikationsschaltkreiseinheit betriebene Betriebsprogramm ist vorzugsweise als ein bezüglich bezüglich der Zulassungsanforderungen (beispielsweise EASA CS-25) als nicht vertrauenswürdiges ("untrusted") Betriebsprogramm ausgebildet, das einen nicht zwingend überwachten Bereich darstellt, wobei das Betriebsprogramm Elemente enthalten kann, die keiner Zulassung unterliegen. Ein Nicht-Vertrauenswürdiges ("untrusted") Betriebsprogramm kann vorteilhaft kostengünstig upgedated werden, da es keiner Zulassung unterliegt. Das auf der Kommunikationsschaltkreiseinheit betriebene Betriebsprogramm ist vorzugsweise nach DAL E entsprechend der Spezifikation RTCA DO 178 zertifiziert. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft eine sichere und leicht zu aktualisierende Flugzeugsitzsteuereinheit für eine Kommunikation mit externen Geräten bereitgestellt werden. Vorzugsweise kann insbesondere die Kommunikationsschaltkreiseinheit so ausgebildet sein, dass sie einfach und schnell aktualisiert werden kann, ohne dass die Funktionsschaltkreise der Funktionsschaltkreiseinheit mit aktualisiert werden müssen, wodurch vorteilhaft ein Zertifizierungsaufwand verringert werden kann. Durch die erfindungsgemäße Ausgestaltung können vorteilhaft geringe Zertifizierungskosten und geringere Projektlaufzeiten bei der Zertifizierung eines von auf den entsprechenden Schaltkreisen ausgeführten Betriebsprogramms erreicht werden.

Weiter wird vorgeschlagen, dass die Funktionsschaltkreiseinheit dazu vorgesehen ist, eine Kommunikations-Schnittstelle zwischen der Funktionsschaltkreiseinheit und der Kommunikationsschaltkreiseinheit zu überwachen. Unter einer "Kommunikations-Schnittstelle" soll vorzugsweise eine Schnittstelle zwischen der Funktionsschaltkreiseinheit und der Kommunikationsschaltkreiseinheit verstanden werden, über die Daten ausgetauscht werden. Die Kommunikationsschnittstelle kann beispielsweise als eine Bus-Schnittstelle, also als ein Datenbus ausgebildet sein. Grundsätzlich ist es auch denkbar, dass die Kommunikationsschnittstelle von einer seriellen Schnittstelle oder einem binären Pin gebildet ist. Darunter, dass die Funktionsschaltkreiseinheit die Kommunikations-Schnittstelle überwacht wird soll verstanden werden, dass die Funktionsschaltkreiseinheit die über die Kommunikationsschnittstelle, insbesondere von der Kommunikationsschalkreiseinheit an die Funktionsschalkreiseinheit, gesendete Daten überwacht und auf Fehler und Manipulationen überprüft. Dadurch können Manipulationsversuche der Flugzeugsitzsteuerung besonders einfach erkannt werden.

Ferner wird vorgeschlagen, dass die Funktionsschaltkreiseinheit bei einer erkannten Manipulation der Kommunikationsschaltkreiseinheit oder der Kommunikations-Schnittstelle dazu vorgesehen ist, die Kommunikationsschaltkreiseinheit zumindest teilweise abzuschalten und/oder einen Datenaustausch zwischen der Kommunikationsschaltkreiseinheit und der Funktionsschaltkreiseinheit über die Schnittstelle zu unterbinden. Unter einer "erkannten Manipulation" soll vorzugsweise eine durch die Überwachung der Kommunikationsschaltkreiseinheit oder der Kommunikationsschnittstelle erkannte Manipulation, beispielsweise durch einen unerlaubten Zugriff durch ein unautorisiertes externes Gerät oder eine Schadsoftware verstanden werden. Unter "zumindest teilweise abschalten" soll verstanden werden, dass zumindest eine Zugriffsmöglichkeit, insbesondere eine Übertragung von Daten von einem externen Gerät auf die Kommunikationsschaltkreiseinheit unterbunden wird. Grundsätzlich ist es auch denkbar, dass die Kommunikationsschaltkreiseinheit komplett deaktiviert wird. Dadurch kann ein unerlaubter Zugriff oder eine Manipulation der Sitzsteuerung vorteilhaft verhindert werden.

Es wird weiterhin vorgeschlagen, dass die Kommunikationsschaltkreiseinheit als eine von der Funktionsschaltkreiseinheit getrennt ausgebildete Platine ausgebildet ist, die über eine Schnittstelle direkt mit der Funktionsschaltkreiseinheit verbunden ist. Die Schnittstelle kann beispielsweise von einer Bus-Schnittstelle, einer seriellen Schnittstelle, oder einer anderen, dem Fachmann als sinnvoll erscheinenden Schnittstelle gebildet sein. Dadurch kann die Kommunikationsschaltkreiseinheit besonders einfach ausgebildet werden.

Des Weiteren wird vorgeschlagen, dass die Kommunikationsschaltkreiseinheit zumindest ein Sende- und/oder Empfangsmodul aufweist, das zu einer drahtlosen Kommunikation und/oder zu einer drahtgebundenen Kommunikation vorgesehen ist. Unter einem "Sende- und/oder Empfangsmodul" soll vorzugsweise ein Modul verstanden werden, das zumindest eine Sende- und Empfangseinheit für eine drahtlose Kommunikation, wie beispielsweise eine Antenne aufweist, die zum Senden und Empfangen eines Signals gemäß des IEEE-Standards 802.15.4 vorgesehen ist. Das Sende- und/oder Empfangsmodul ist vorzugsweise als ein Bluetooth-Modul, ein W-LAN-Modul, oder als ein Zigbee-Modul ausgebildet. Vorzugsweise weist das Sende- und/oder Empfangsmodul eine Sende- und Empfangseinheit für eine drahtgebundene Kommunikation auf, die zumindest eine als Steckverbindung ausgebildete Schnittstelle aufweist, über die ein entsprechendes Kabel zur kabelgebundenen Kommunikation anschließbar ist. Darunter, dass das Sende- und/oder Empfangsmodul zu einer drahtgebundenen und/oder drahtlosen Kommunikation vorgesehen ist, soll verstanden werden, dass ein Sende- und/oder Empfangsmodul sowohl eine Sende- und Empfangseinheit für eine drahtlose Kommunikation und eine Sende- und Empfangseinheit für eine drahtgebundene Kommunikation aufweisen kann, als auch jeweils nur eine der beiden Sende- und Empfangseinheiten. Dadurch kann die Kommunikationsschaltkreiseinheit besonders vorteilhaft für eine drahtlose Kommunikation ausgebildet werden.

Weiterhin wird vorgeschlagen, dass die Kommunikationsschaltkreiseinheit und die Funktionsschaltkreiseinheit in einem gemeinsamen Gehäuse untergebracht sind. Unter einem "gemeinsamen Gehäuse" soll vorzugsweise ein Gehäuse verstanden werden, das sowohl die Funktionsschaltkreiseinheit als auch die Kommunikationsschaltkreiseinheit zumindest im Wesentlichen, vorzugsweise komplett umschließt und vor einer Manipulation von außen schützt. Dadurch kann die Flugzeugsitzsteuereinheit besonders kompakt und manipulationssicher ausgebildet werden.

Außerdem wird vorgeschlagen, dass ein auf der Kommunikationsschaltkreiseinheit laufendes Betriebsprogramm als ein nicht vertrauenswürdiges Betriebsprogramm ausgebildet und insbesondere nach DAL E zertifiziert ist. Unter einem "nicht vertrauenswürdigen Betriebsprogramm" soll vorzugsweise ein Betriebsprogramm verstanden werden, das bezüglich Zulassungsanforderungen (beispielsweise EASA CS-25) als nicht Vertrauenswürdig angesehen wird, da es Programmelemente enthalten kann, die keiner Zulassung unterliegen. Das nicht vertrauenswürdige Betriebsprogramm stellt einen nicht zwingend überwachten Bereich dar. Unter einer Zertifizierung nach "DAL E" soll eine Zertifizierung für ein Betriebsprogramm entsprechend der Spezifikation RTCA DO 178 verstanden werden. Dadurch kann ein Betriebsprogramm für die Kommunikationsschaltkreiseinheit besonders einfach und ohne großen Zertifizierungsaufwand aktualisiert werden.

Es wird weiter ein Verfahren zum Betrieb einer Flugzeugsitzsteuereinheit mit einem auf einer Funktionsschaltkreiseinheit laufenden Betriebsprogramm zur Steuerung des Flugzeugsitzes und mit einem auf einer Kommunikationsschaltkreiseinheit laufenden Betriebsprogramm, das zu einer externen Kommunikation vorgesehen ist, vorgeschlagen, wobei das auf der Funktionsschaltkreiseinheit laufende Betriebsprogramm eine Überwachungsfunktion aufweist, die das auf der Kommunikationsschaltkreiseinheit laufende Kommunikationsbetriebsprogramm und/oder eine Kommunikation zwischen der Funktionsschaltkreiseinheit und der Kommunikationsschaltkreiseinheit überwacht. Unter einer "Überwachungsfunktion" soll vorzugsweise eine von dem Betriebsprogramm der Funktionsschaltkreiseinheit ausgeführte Funktion verstanden werden, die das Kommunikationsbetriebsprogramm auf Unregelmäßigkeiten, Fehler und Manipulationen hin überwacht. Dadurch kann die Kommunikationsschaltkreiseinheit besonders einfach überwacht und die Flugzeugsitzsteuereinheit vor Manipulation von einer externen Quelle geschützt werden.

Zudem wird vorgeschlagen, dass das auf der Funktionsschaltkreiseinheit laufende Betriebsprogramm dazu vorgesehen ist, bei einem erkannten Fehler oder einer erkannten Manipulation das auf der Kommunikationsschaltkreiseinheit laufende Kommunikationsbetriebsprogramm zu beenden oder eine Kommunikation zwischen der Funktionsschaltkreiseinheit und der Kommunikationsschaltkreiseinheit zu beenden. Dadurch kann die Funktionsschaltkreiseinheit besonders vorteilhaft betrieben werden.

Ferner wird ein Computerprogramm, umfassend Befehle, die bei der Ausführung des Programms durch einen Computer diesen veranlassen, das Verfahren/die Schritte des Verfahrens auszuführen, vorgeschlagen.

Die erfindungsgemäße Flugzeugsitzsteuereinheit soll hierbei nicht auf die oben beschriebene Anwendung und Ausführungsform beschränkt sein. Insbesondere kann die erfindungsgemäße Flugzeugsitzsteuereinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein schematisch dargestellter Flugzeugsitz mit einer Flugzeugsitzsteuereinheit,
- Fig. 2: eine schematisierte Darstellung der erfindungsgemäßen Flugzeugsitzsteuereinheit mit einer Funktionsschaltkreiseinheit und einer Kommunikationsschaltkreiseinheit in einem gemeinsamen Gehäuse,
- Fig. 3: eine schematisierte Darstellung der erfindungsgemäßen Flugzeugsitzsteuereinheit mit einer Funktionsschaltkreiseinheit und einer Kommunikationsschaltkreiseinheit einem zweiten Ausführungsbeispiel, und
- Fig. 4: ein schematisch Dargestelltes Ablaufdiagramm eines Betriebsprogramms der Funktionsschaltkreiseinheit.

### Beschreibung des Ausführungsbeispiels

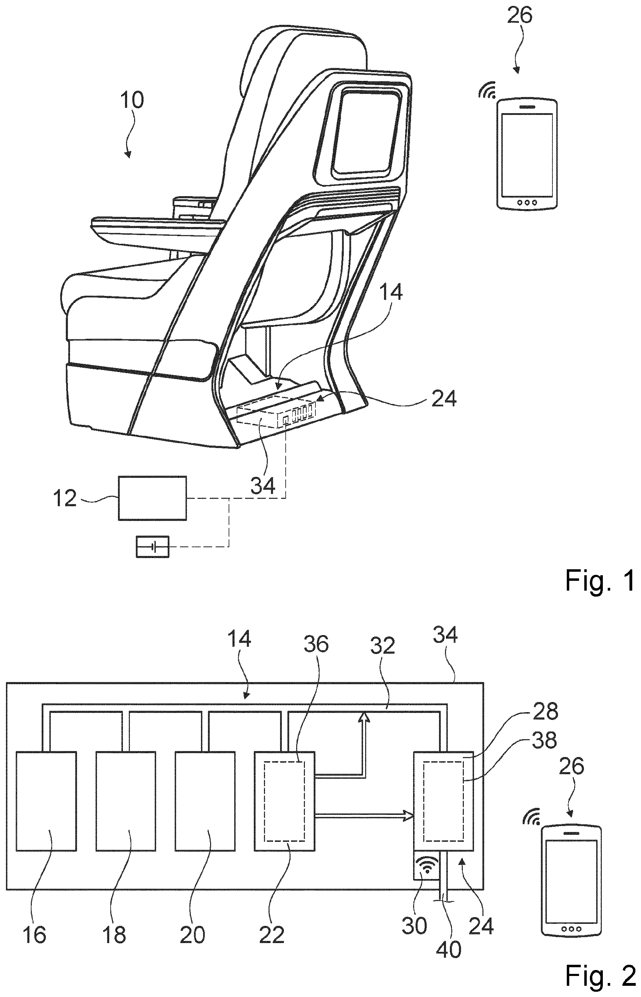

In den Figuren 1 bis 4 ist eine erfindungsgemäße Flugzeugsitzsteuereinheit für einen Flugzeugsitz 10 dargestellt. Figur 1 zeigt einen Flugzeugsitz 10. Der in Figur 1 dargestellte Flugzeugsitz 10 soll hierbei nur schematisch und als ein Beispiel für einen Flugzeugsitz dargestellt sein. Dabei ist es grundsätzlich auch denkbar, dass der Flugzeugsitz 10 eine andere, dem Fachmann als sinnvoll erscheinende Ausgestaltung aufweist. Der Flugzeugsitz 10 ist als ein Business- oder First-Class-Flugzeugsitz ausgebildet. Grundsätzlich ist es natürlich auch denkbar, dass der Flugzeugsitz 10 als ein Economy-Class-Flugzeugsitz ausgebildet ist. Der Flugzeugsitz 10 ist in einem nicht näher dargestellten Flugzeug aufgeständert. Dazu weist der Flugzeugsitz 10 eine Aufständereinheit auf, mittels der der Flugzeugsitz 10 fest mit einem Kabinenboden des Flugzeugs verbunden ist. Das Flugzeug umfasst eine Flugzeugelektronik 12. Die Flugzeugelektronik 12 umfasst eine generelle Stromversorgung von elektrischen und/oder elektronischen Komponenten des Flugzeugs.

Die Flugzeugsitzsteuereinheit ist zur Steuerung des Flugzeugsitzes 10 vorgesehen. Die Flugzeugsitzsteuereinheit weist zur Steuerung eine Funktionsschaltkreiseinheit 14 auf. Die Funktionsschaltkreiseinheit 14 umfasst mehrere Funktionsschaltkreise 16, 18, 20, 22. In der vorliegenden Ausgestaltung weist die Funktionsschaltkreiseinheit 14 genau vier Funktionsschaltkreise 16, 18, 20, 22 auf. Grundsätzlich ist es auch denkbar, dass die Funktionsschaltkreiseinheit 14 eine andere Anzahl an Funktionsschaltkreisen 16, 18, 20, 22 aufweist. Die drei ersten Funktionsschaltkreise 16, 18, 20, sollen hierbei nur beispielhaft für eine Ausgestaltung der Funktionsschaltkreiseinheit 14 der Flugzeugsitzsteuereinheit angesehen werden. Der erste Funktionsschaltkreis 16 ist als ein Sitzplatzsteuerungsschaltkreis ausgebildet. Der als Sitzplatzsteuerungsschaltkreis ausgebildete Funktionsschaltkreis 16 ist dazu vorgesehen, eine Steuerung des Flugzeugsitzes 10 zu übernehmen. Der als Sitzplatzsteuerungsschaltkreis ausgebildete erste Funktionsschaltkreis 16 berechnet dabei abhängig von verschiedenen Eingangssignalen eine Steuerung des Flugzeugsitzes 10. Der zweite Funktionsschaltkreis 18 ist als ein Lichtsteuerschaltkreis ausgebildet. Der als Lichtsteuerschaltkreis ausgebildete zweite Funktionsschaltkreis 18 ist zur Ansteuerung von Lichtelementen an und um den Flugzeugsitz 10 herum vorgesehen. Der dritte Funktionsschaltkreis 20 ist als ein Sensor- und/oder Aktuatorschnittstellenschaltkreis ausgebildet. Der dritte, als Sensor- und/oder Aktuatorschnittstellenschaltkreis ausgebildete Funktionsschaltkreis 20 ist zur Ansteuerung von Aktuatoren des Flugzeugsitzes 10 und zur Verarbeitung und Auswertung von Sensorsignalen, die von Sensoren des Flugzeugsitzes 10 bereitgestellt werden, vorgesehen. Dabei steuert der dritte, als Sensor- und/oder Aktuatorschnittstellenschaltkreis ausgebildete Funktionsschaltkreis 20 Aktuatoren des Flugzeugsitzes 10 aufgrund von Eingaben eines Bedieners oder aufgrund von ausgewerteten Sensorsignalen an. Außerdem verarbeitet und wertet der dritte, als Sensor- und/oder Aktuatorschnittstellenschaltkreis ausgebildete Funktionsschaltkreis 20 von Sensoren des Flugzeugsitzes 10 ausgegebene Sensorsignale aus und gibt entsprechende Ausgangssignale aus. Die ersten drei Funktionsschaltkreise 16, 18, 20 sind zur Steuerung des Flugzeugsitzes 10 vorgesehen.

Der vierte Funktionsschaltkreis 22 ist als ein Serviceschaltkreis ausgebildet. Der als Serviceschaltkreis ausgebildete Funktionsschaltkreis 22 ist für eine Kommunikation der Funktionsschaltkreise 16, 18, 20 der Funktionsschaltkreiseinheit 14 vorgesehen. Der als Serviceschaltkreis ausgebildete Funktionsschaltkreis 22 ist vorzugsweise auch zur Versorgung der Funktionsschaltkreiseinheit 14 mit elektrischer Energie vorgesehen. Der als Serviceschaltkreis ausgebildete Funktionsschaltkreis 22 ist zur Überwachung der Funktionsschaltkreiseinheit 14 vorgesehen. Die vier Funktionsschaltkreise 16, 18, 20, 22 sind vorzugsweise jeweils auf einer eigenen Platine aufgebracht. Die einzelnen Platinen, auf denen jeweils einer der Funktionsschaltkreise 16, 18, 20, 22 aufgebracht ist, sind vorzugsweise über einen Schnittstellenschaltkreis miteinander verbunden. Die Funktionsschaltkreise 16, 18, 20, 22 sind jeweils über eine interne Verbindung über den Schnittstellenschaltkreis miteinander verbunden. Die Funktionsschaltkreise 16, 18, 20, 22 sind vorzugsweise über einen internen BUS miteinander verbunden.

Die Funktionsschaltkreiseinheit 14, insbesondere die Funktionsschaltkreise 16, 18, 20, 22 sind dazu vorgesehen, ein Betriebsprogramm zur Steuerung des Flugzeugsitzes 10 auszuführen. Ein Betriebsprogramm zur Steuerung des Flugzeugsitzes 10 ist auf der Funktionsschaltkreiseinheit 14, insbesondere auf den Funktionsschaltkreisen 16, 18, 20, 22 abgespeichert. Das Betriebsprogramm zur Steuerung des Flugzeugsitzes 10 wird während eines Betriebs auf der Funktionsschaltkreiseinheit 14 ausgeführt. Das Betriebsprogramm zur Steuerung des Flugzeugsitzes 10, das auf der Funktionsschaltkreiseinheit 14 ausgeführt wird, ist als eine Steuersoftware ausgebildet. Das als Steuersoftware ausgebildete Betriebsprogramm ist dazu vorgesehen, Eingabesignale aufzunehmen und zu verarbeiten und dann entsprechende Steuersignale an den Flugzeugsitz 10 auszugeben. Das Betriebsprogramm der Funktionsschaltkreiseinheit 14 ist als ein vertrauenswürdiges ("trusted") Betriebsprogramm ausgebildet. Das Betriebsprogramm der Funktionsschaltkreiseinheit 14 zur Steuerung des Flugzeugsitzes 10 ist nach DAL D zertifiziert.

Die Flugzeugsitzsteuereinheit weist eine Kommunikationsschaltkreiseinheit 24 auf. Die Kommunikationsschaltkreiseinheit 24 ist zur Kommunikation mit externen Steuereinheiten 26 vorgesehen. Die Kommunikationsschaltkreiseinheit 24 ist zur drahtlosen und drahtgebundenen Kommunikation mit externen Steuereinheiten 26 vorgesehen. Die Kommunikationsschaltkreiseinheit 24 ist zu einer Kommunikation mit einer der externen Steuereinheiten, wie insbesondere einem elektronischen Gerät, wie einem Smartphone oder Tablet, oder einem Steuergerät einer Flugzeugkabine vorgesehen.. Grundsätzlich wäre es auch denkbar, dass die Kommunikationsschaltkreiseinheit 24 lediglich zu einer kabelgebundenen Kommunikation mit einer externen Steuereinheit 26 vorgesehen ist. Grundsätzlich wäre es ebenso denkbar, dass die Kommunikationsschaltkreiseinheit 24 lediglich zu einer kabellosen Kommunikation mit einer externen Steuereinheit 26 vorgesehen ist. Die Kommunikationsschaltkreiseinheit 24 weist einen Kommunikationsschaltkreis 28 auf. Der Kommunikationsschaltkreis 28 ist zur Verarbeitung und Weiterleitung von empfangenen Signalen vorgesehen. Die Kommunikationsschaltkreiseinheit 24 weist ein Sende- und Empfangsmodul 30 auf, das zu einer drahtlosen Kommunikation vorgesehen ist. Das Sende- und Empfangsmodul 30 ist als ein drahtloses Sende- und Empfangsmodul ausgebildet. Das Sende- und Empfangsmodul 30 ist zur drahtlosen Kommunikation gemäß dem IEEE-Standard 802.15.4 vorgesehen. Das Sende- und Empfangsmodul 30 ist zu einer Bluetooth-Verbindung vorgesehen. Das Sende- und Empfangsmodul 30 umfasst zur Bereitstellung einer Bluetooth-Verbindung eine Bluetooth-Antenne. Zudem ist das Sende- und Empfangsmodul zu einer W-LAN Verbindung vorgesehen. Das Sende- und Empfangsmodul 30 umfasst zur Bereitstellung einer W-LAN-Verbindung eine W-LAN-Antenne. Grundsätzlich ist es auch denkbar, dass das Sende- und Empfangsmodul 30 zu anderen drahtlosen Verbindungsarten vorgesehen ist, und dazu eine entsprechende Antenne aufweist. Die Kommunikationsschaltkreiseinheit 24 weist ein zweites Sende- und Empfangsmodul 40 auf, das zu einer kabelgebundenen Kommunikation vorgesehen ist. Das zweite Sende- und Empfangsmodul 40 ist als ein kabelgebundenes Sende- und Empfangsmodul ausgebildet. Das kabelgebundene Sende- und Empfangsmodul 40 weist eine Steckereinheit auf. Die Steckereinheit des kabelgebundenen Sende- und Empfangsmoduls 40 ist als eine Schnittstelle ausgebildet, über die ein Kabel an die Kommunikationsschaltkreiseinheit 24 anbindbar ist. Über die Schnittstelle des kabelgebundenen Sende- und Empfangsmoduls 40 ist eine Flugzeugelektronik oder eine andere externe Steuereinheit an die Kommunikationsschaltkreiseinheit 24 über ein Kabel anbindbar. Die Kommunikationsschaltkreiseinheit 24 ist softwaretechnisch getrennt von der Funktionsschaltkreiseinheit 14 ausgebildet. Die Kommunikationsschaltkreiseinheit 24 ist dazu vorgesehen, ein Betriebsprogramm zur Kommunikation mit externen Steuereinheiten 26 auszuführen. Auf der Kommunikationsschaltkreiseinheit 24, insbesondere auf dem Kommunikationsschaltkreis 28, ist das Betriebsprogramm zur drahtlosen oder kabelgebundenen Kommunikation abgespeichert. Das Betriebsprogramm zur Kommunikation wird während eines Betriebs auf der Kommunikationsschaltkreiseinheit 24 ausgeführt. Das Betriebsprogramm zur Kommunikation, das auf der Kommunikationsschaltkreiseinheit 24 ausgeführt wird, ist als eine Kommunikationssoftware ausgebildet. Das auf der Kommunikationsschaltkreiseinheit 24 betriebene, als Kommunikationssoftware ausgebildete, Betriebsprogramm ist getrennt von dem als Steuersoftware ausgebildeten Betriebsprogramm ausgebildet, das auf der Funktionsschaltkreiseinheit 14 betrieben wird. Das als Kommunikationssoftware ausgebildete Betriebsprogramm der Kommunikationsschaltkreiseinheit 24 ist als ein eigenständiges Betriebsprogramm ausgebildet. Das als Kommunikationssoftware ausgebildete Betriebsprogramm der Kommunikationsschaltkreiseinheit 24 ist als ein Nicht-Vertrauenswürdiges ("untrusted") Betriebsprogramm ausgebildet. Das als nicht vertrauenswürdig eingestufte als Kommunikationssoftware ausgebildete Betriebsprogramm kann nicht zertifizierte Programmelemente aufweisen. Die nicht zertifizierten Programmelemente müssen bei einer Änderung nicht von entsprechenden Zertifizierstellen einer Fluggesellschaft oder eines Flugzeugherstellers neu zertifiziert werden, wenn Änderungen an dem Programmelementen vorgenommen werden. Das Betriebsprogramm der Kommunikationsschaltkreiseinheit 24 zur Kommunikation mit externen Steuereinheiten ist nach DAL E zertifiziert.

Die Funktionsschaltkreiseinheit 14 ist dazu vorgesehen, die Kommunikationsschaltkreiseinheit 24 zu überwachen. Das auf der Funktionsschaltkreiseinheit 14 betriebene, als Steuersoftware ausgebildete Betriebsprogramm ist dazu vorgesehen, das als Kommunikationssoftware ausgebildete Betriebsprogramm, das auf der Kommunikationsschaltkreiseinheit 24 betrieben wird, zu überwachen. Das als Steuersoftware ausgebildete Betriebsprogramm der Funktionsschaltkreiseinheit 14 überwacht, ob das als Kommunikationssoftware ausgebildete Betriebsprogramm der Kommunikationsschaltkreiseinheit 24 in den vorgegebenen Parametern normal läuft. Das als Steuersoftware ausgebildete Betriebsprogramm der Funktionsschaltkreiseinheit 14 ist dazu vorgesehen, Fehler, unzulässige Zugriffe und Manipulationen des auf der Kommunikationsschaltkreiseinheit 24 betriebenen Betriebsprogramms zu erkennen.

Die Flugzeugsitzsteuereinheit weist eine Kommunikationsschnittstelle 32 auf. Die Kommunikationsschnittstelle 32 ist zwischen der Funktionsschaltkreiseinheit 14 und der Kommunikationsschaltkreiseinheit 24 angeordnet. Die Kommunikationsschnittstelle 32 bildet eine Datenaustausch-Schnittstelle zwischen der Funktionsschaltkreiseinheit 14 und der Kommunikationsschaltkreiseinheit 24 aus. Die Kommunikationsschnittstelle 32 ist als eine BUS-Schnittstelle ausgebildet. Grundsätzlich wäre es auch denkbar, dass die Kommunikationsschnittstelle 32 als eine andere Schnittstelle zum Datenaustausch ausgebildet ist. Über die Kommunikationsschnittstelle 32 tauschen die Funktionsschaltkreiseinheit 14 und die Kommunikationsschaltkreiseinheit 24 entsprechende Daten aus. Die Funktionsschaltkreiseinheit 14 ist dazu vorgesehen, eine Kommunikationsschnittstelle 32 zwischen der Funktionsschaltkreiseinheit 14 und der Kommunikationsschaltkreiseinheit 24 zu überwachen. Das auf der Funktionsschaltkreiseinheit 14 laufende Betriebsprogramm überwacht die Daten, die von der Kommunikationsschaltkreiseinheit 24 an die Funktionsschaltkreiseinheit 14 übertragen werden. Die Funktionsschaltkreiseinheit 14 ist dazu vorgesehen, die Daten, die von der Kommunikationsschaltkreiseinheit 24 an die Funktionsschaltkreiseinheit 14 übertragen werden, auf Manipulationen, Fehler und Schadsoftware hin zu überprüfen. Die Funktionsschaltkreiseinheit 14 ist dazu vorgesehen, die Daten, die von der Kommunikationsschaltkreiseinheit 24 an die Funktionsschaltkreiseinheit 14 übertragen werden, zu überprüfen. Das auf der Funktionsschaltkreiseinheit 14 laufende Betriebsprogramm ist dazu vorgesehen, in den über die Kommunikationsschnittstelle 32 von der Kommunikationsschaltkreiseinheit 24 an die Funktionsschaltkreiseinheit 14 zu übertragenden Daten Manipulationen, Fehler und Schadsoftware zu erkennen.

Die Funktionsschaltkreiseinheit 14 ist bei einer erkannten Manipulation der Kommunikationsschaltkreiseinheit 24 oder der Kommunikationsschnittstelle 32 dazu vorgesehen, die Kommunikationsschaltkreiseinheit 24 zumindest teilweise abzuschalten. Das auf der Funktionsschaltkreiseinheit 14 laufende Betriebsprogramm schaltet die Kommunikationsschaltkreiseinheit 24 bei einer erkannten Manipulation oder bei einer erkannten Schadsoftware zumindest teilweise ab. Vorzugsweise wird zumindest das Sende- und Empfangsmodul 30 bei einer erkannten Manipulation oder einer erkannten Schadsoftware abgeschaltet, sodass keine weiteren Daten von einer externen Steuereinheit auf die Kommunikationsschaltkreiseinheit 24 und dann die Funktionsschaltkreiseinheit 14 übertragen werden können. Grundsätzlich ist es auch denkbar, dass lediglich ein Teil der entsprechenden Antennen des Sende- und Empfangsmoduls 30 abgeschaltet werden, über die eine erkannte Manipulation oder ein erkannter Manipulationsversuch stattgefunden hat.

Alternativ oder zusätzlich ist die Funktionsschaltkreiseinheit 14 bei einer erkannten Manipulation der Kommunikationsschaltkreiseinheit 24 oder der Kommunikationsschnittstelle 32 dazu vorgesehen, einen Datenaustausch zwischen der Kommunikationsschaltkreiseinheit 34 und der Funktionsschaltkreiseinheit 14 über die Kommunikationsschnittstelle 32 zu unterbinden. Das auf der Funktionsschaltkreiseinheit 14 laufende Betriebsprogramm verhindert eine Übertragung von Daten über die Kommunikationsschnittstelle 32 bei einer erkannten Manipulation oder bei einer erkannten Schadsoftware. Nach einer erkannten Manipulation oder bei einer erkannten Schadsoftware unterbindet das Betriebsprogramm der Funktionsschaltkreiseinheit 14 eine Übertragung von Daten von der Kommunikationsschaltkreiseinheit 34 auf die Funktionsschaltkreiseinheit 14, wodurch ein externer Zugriff auf die Funktionsschaltkreiseinheit 14 verhindert wird.

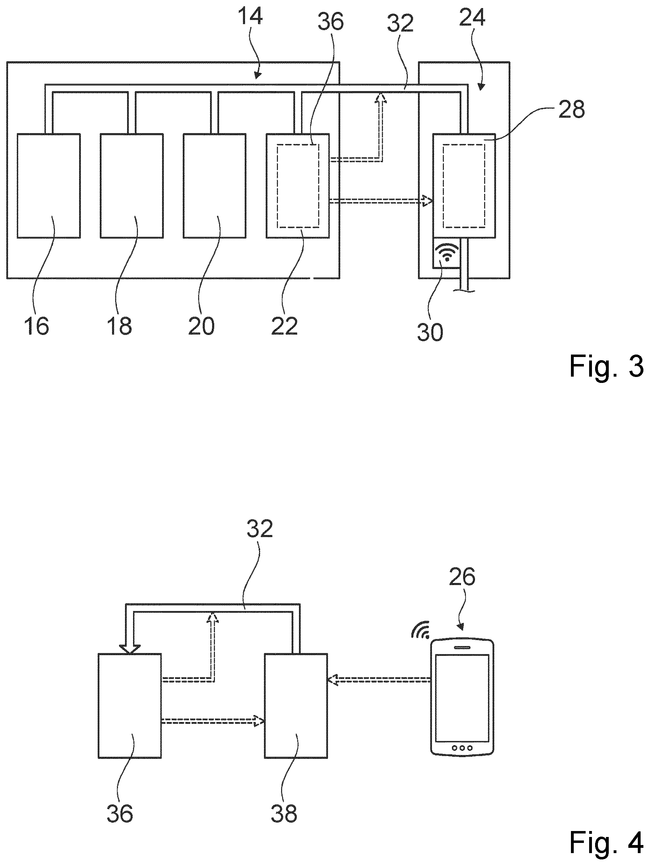

In einer ersten Ausgestaltung, wie in Figur 2 gezeigt, ist die Kommunikationsschaltkreiseinheit 24 als eine von der Funktionsschaltkreiseinheit 14 getrennt ausgebildete Platine ausgebildet. Die Kommunikationsschaltkreiseinheit 24 ist über eine als interner BUS ausgebildete Kommunikationsschnittstelle 32 mit der Funktionsschaltkreiseinheit 14 direkt verbunden. Die Kommunikationsschaltkreiseinheit 24 und die Funktionsschaltkreiseinheit 14 sind in einem gemeinsamen Gehäuse 34 untergebracht. Grundsätzlich wäre es in einer weiteren Ausgestaltung gemäß Figur 3 auch denkbar, dass die Kommunikationsschaltkreiseinheit 24 als eine von der Funktionsschaltkreiseinheit 14 räumlich getrennte Einheit ausgebildet ist. Die Kommunikationsschaltkreiseinheit 24 könnte dabei in einem eigenen Gehäuse an einer anderen Stelle als die Funktionsschaltkreiseinheit 14 angeordnet sein.

Im Folgenden soll kurz ein erfindungsgemäßes Verfahren zum Betrieb einer Flugzeugsitzsteuereinheit mit einem auf einer Funktionsschaltkreiseinheit 14 laufenden Betriebsprogramm 36 zur Steuerung des Flugzeugsitzes 10 und mit einem auf einer Kommunikationsschaltkreiseinheit 24 laufenden Betriebsprogramm 38, das zu einer externen Kommunikation vorgesehen ist, beschrieben werden.

Das auf der Funktionsschaltkreiseinheit 14 laufende Betriebsprogramm 36 weist eine Überwachungsfunktion auf. Die Überwachungsfunktion des Betriebsprogramms 36 überwacht das auf der Kommunikationsschaltkreiseinheit 24 laufende Betriebsprogramm 38. Die Überwachungsfunktion des Betriebsprogramms 36 überwacht, ob das Betriebsprogramm 38 der Kommunikationsschaltkreiseinheit 24 in seinen normalen Parametern abläuft. Das Betriebsprogramm 36 der Funktionsschaltkreiseinheit 14 erkennt, wenn das Betriebsprogramm 38 der Kommunikationsschaltkreiseinheit 24 nicht in seinen normalen Parametern abläuft und erkennt Manipulationsversuche durch eine externe Steuereinheit oder ein Fehlverhalten der externen Steuereinheit zu einem Fehler führt.

Die Überwachungsfunktion des Betriebsprogramms 36 überwacht eine Kommunikation zwischen der Funktionsschaltkreiseinheit 14 und der Kommunikationsschaltkreiseinheit 24. Die Überwachungsfunktion des Betriebsprogramms 36 überwacht die Daten, die über die Kommunikationsschnittstelle 32 von der Kommunikationsschaltkreiseinheit 24 an die Funktionsschaltkreiseinheit 14 übermittelt werden. Die Überwachungsfunktion des Betriebsprogramms 36 erkennt Manipulationen der übermittelten Daten, insbesondere Schadsoftware, manipulierte Daten oder ein Fehlverhalten.

Das auf der Funktionsschaltkreiseinheit 14 laufende Betriebsprogramm 36 ist dazu vorgesehen, bei einem erkannten Fehler oder einer erkannten Manipulation das auf der Kommunikationsschaltkreiseinheit 24 laufende Betriebsprogramm 38 zu beenden oder eine Kommunikation zwischen der Funktionsschaltkreiseinheit 14 und der Kommunikationsschaltkreiseinheit 24 zu beenden. Erkennt die Überwachungsfunktion des Betriebsprogramms 36 beispielsweise eine Manipulation oder eine Schadsoftware beendet das Betriebsprogramm 36 der Funktionsschaltkreiseinheit 14 das Betriebsprogramm 38 der Kommunikationsschaltkreiseinheit 24 oder versetzt dieses in einen abgesicherten Modus, in dem kein Zugriff mehr durch eine externe Steuereinheit 26 zugelassen wird. Grundsätzlich ist es denkbar, dass das Betriebsprogramm 36 der Funktionsschaltkreiseinheit 14 eine Übertragung von Daten über die Kommunikationsschnittstelle 32 unterbindet, wobei ein externer Zugriff auf die Kommunikationsschaltkreiseinheit 24 bestehen bleibt. Ein Datenlogging, also eine Abspeicherung von Daten bezüglich einer Störung des Betriebsprogramms der Kommunikationsschaltkreiseinheit 24 wird von dem Betriebsprogramm der Funktionsschaltkreiseinheit vorgenommen. Damit können insbesondere Daten bezüglich eines Fehlers oder einer Manipulation, beispielsweise eine Uhrzeit, oder wo im Programmcode der Fehler oder die Manipulation aufgetreten ist, nachvollziehbar und sicher abgespeichert werden und sind zur Analyse abrufbar.

Durch die softwaretechnische Trennung der Funktionsschaltkreiseinheit 14 und der Kommunikationsschaltkreiseinheit 24, sowie die Überwachung des Betriebsprogramms 38 der Kommunikationsschaltkreiseinheit 24 durch das Betriebsprogramm 36 der Funktionsschaltkreiseinheit 14 kann das Betriebsprogramm 38 der Kommunikationsschaltkreiseinheit 24 nicht-vertrauenswürdig ("untrusted") sein, beispielsweise lediglich nach DAL E zertifiziert sein, während das Betriebsprogramm 36 der Funktionsschaltkreiseinheit 14 vertrauenswürdig ("trusted") ist und beispielsweise nach DAL D zertifiziert ist. Dadurch kann das Betriebsprogramm 38 der Kommunikationsschaltkreiseinheit 24 besonderes einfach und ohne hohe Zertifizierungskosten geändert und geupdatet werden, sollten Sicherheitslücken in dem Betriebsprogramm 38 der Kommunikationsschaltkreiseinheit 24 festgestellt werden. Vorteilhaft kann durch die Trennung eine zusätzliche Zertifizierung des Betriebsprogramms 36 der Funktionsschaltkreiseinheit 14 bei einem Update des Betriebsprogramms 38 der Kommunikationsschaltkreiseinheit 24 verhindert werden.

### Bezugszeichen

- 10: Flugzeugsitz
- 12: Flugzeugelektronik
- 14: Funktionsschaltkreiseinheit
- 16: Funktionsschaltkreis
- 18: Funktionsschaltkreis
- 20: Funktionsschaltkreis
- 22: Funktionsschaltkreis
- 24: Kommunikationsschaltkreiseinheit
- 26: externe Steuereinheit
- 28: Kommunikationsschaltkreis
- 30: Sende- und Empfangsmodul
- 32: Kommunikationsschnittstelle
- 34: Gehäuse
- 36: Betriebsprogramm
- 38: Betriebsprogramm
- 40: Sende- und Empfangsmodul

## Patentansprüche

1. Flugzeugsitzsteuereinheit für einen Flugzeugsitz (10), mit einer Funktionsschaltkreiseinheit (14), die zumindest einen Funktionsschaltkreis (16, 18, 20, 22) zur Steuerung des Flugzeugsitzes (10) aufweist, und mit einer Kommunikationsschaltkreiseinheit (24), die zumindest einen Kommunikationsschaltkreis (28) aufweist und zur Kommunikation mit zumindest einer externen Steuereinheit (26) vorgesehen ist, **dadurch gekennzeichnet, dass** die Kommunikationsschaltkreiseinheit (24) zumindest softwaretechnisch getrennt von der Funktionsschaltkreiseinheit (14) ausgebildet ist, und die Funktionsschaltkreiseinheit (14) dazu vorgesehen ist, die Kommunikationsschaltkreiseinheit (24) zu überwachen.

2. Flugzeugsitzsteuereinheit nach Anspruch 1, **dadurch gekennzeichnet, dass** die Funktionsschaltkreiseinheit (14) dazu vorgesehen ist, eine Kommunikationsschnittstelle (32) zwischen der Funktionsschaltkreiseinheit (14) und der Kommunikationsschaltkreiseinheit (24) zu überwachen.

3. Flugzeugsitzsteuereinheit nach einem der vorhergehenden Ansprüche, **dadurch gekennzeichnet, dass** die Funktionsschaltkreiseinheit (14) bei einer erkannten Manipulation der Kommunikationsschaltkreiseinheit (24) oder der Kommunikationsschnittstelle (32) dazu vorgesehen ist, die Kommunikationsschaltkreiseinheit (24) zumindest teilweise abzuschalten und/oder einen Datenaustausch zwischen der Kommunikationsschaltkreiseinheit (24) und der Funktionsschaltkreiseinheit (14) über die Kommunikationsschnittstelle (32) zu unterbinden.

4. Flugzeugsitzsteuereinheit nach Anspruch 1 oder 2, **dadurch gekennzeichnet, dass** die Kommunikationsschaltkreiseinheit (24) als ein von der Funktionsschaltkreiseinheit (14) getrennt ausgebildetes Board ausgebildet ist, das über einen Bus direkt mit der Funktionsschaltkreiseinheit (14) verbunden ist.

5. Flugzeugsitzsteuereinheit nach einem der vorhergehenden Ansprüche, **dadurch gekennzeichnet, dass** die Kommunikationsschaltkreiseinheit (24) zumindest ein Sende- und/oder Empfangsmodul (30, 40) aufweist, das zu einer drahtlosen Kommunikation und/oder zu einer drahtgebundenen Kommunikation vorgesehen ist.

6. Flugzeugsitzsteuereinheit nach einem der vorhergehenden Ansprüche, **dadurch gekennzeichnet, dass** die Kommunikationsschaltkreiseinheit (24) und die Funktionsschaltkreiseinheit (14) in einem gemeinsamen Gehäuse (34) untergebracht sind.

7. Flugzeugsitzsteuereinheit nach einem der vorhergehenden Ansprüche, **dadurch gekennzeichnet, dass** ein auf der Kommunikationsschaltkreiseinheit (24) laufendes Betriebsprogramm (38) als ein nicht vertrauenswürdiges Betriebsprogramm ausgebildet und insbesondere nach DAL E zertifiziert ist.

8. Verfahren zum Betrieb einer Flugzeugsitzsteuereinheit mit einem auf einer Funktionsschaltkreiseinheit (14) laufenden Betriebsprogramm (36) zur Steuerung des Flugzeugsitzes (10) und mit einem auf einer Kommunikationsschaltkreiseinheit (24) laufenden Betriebsprogramm (38), das zu einer externen Kommunikation vorgesehen ist, **dadurch gekennzeichnet, dass** das auf der Funktionsschaltkreiseinheit (14) laufende Betriebsprogramm (36) eine Überwachungsfunktion aufweist, die das auf der Kommunikationsschaltkreiseinheit (24) laufende Betriebsprogramm (38) und/oder eine Kommunikation zwischen der Funktionsschaltkreiseinheit (14) und der Kommunikationsschaltkreiseinheit (24) überwacht.

9. Verfahren zum Betrieb einer Flugzeugsitzsteuereinheit nach Anspruch 8, **dadurch gekennzeichnet, dass** das auf der Funktionsschaltkreiseinheit (14) laufende Betriebsprogramm (36) dazu vorgesehen ist, bei einem erkannten Fehler oder einer erkannten Manipulation das auf der Kommunikationsschaltkreiseinheit (24) laufende Betriebsprogramm (38) zu beenden oder eine Kommunikation zwischen der Funktionsschaltkreiseinheit (14) und der Kommunikationsschaltkreiseinheit (24) zu beenden.

10. Computerprogramm, umfassend Befehle, die bei der Ausführung des Programms durch einen Computer diesen veranlassen, das Verfahren/die Schritte des Verfahrens nach Anspruch 8 oder 9 auszuführen.

## Claims

1. Aircraft seat control unit for an aircraft seat (10),
having a function circuit unit (14) which comprises at least one function circuit (16, 18, 20, 22) for controlling the aircraft seat (10),
and having a communication circuit unit (24) which comprises at least one communication circuit (28) and is configured for communication with at least one external control unit (26),
**characterized in that** the communication circuit unit (24) is realized separately from the function circuit unit (14), at least with respect to software technology, and the function circuit unit (14) is configured to monitor the communication circuit unit (24).

2. Aircraft seat control unit according to claim 1,
**characterized in that** the function circuit unit (14) is configured to monitor a communication interface (32) between the function circuit unit (14) and the communication circuit unit (24).

3. Aircraft seat control unit according to any one of the preceding claims, **characterized in that** the function circuit unit (14), in the event of a detected manipulation of the communication circuit unit (24) or of the communication interface (32), is configured to at least partially switch off the communication circuit unit (24) and/or to suppress a data exchange between the communication circuit unit (24) and the function circuit unit (14) via the communication interface (32).

4. Aircraft seat control unit according to claim 1 or 2,
**characterized in that** the communication circuit unit (24) is implemented as a board which is realized separately from the function circuit unit (14) and is directly connected to the function circuit unit (14) via a bus.

5. Aircraft seat control unit according to any one of the preceding claims, **characterized in that** the communication circuit unit (24) comprises at least one transmitter and/or receiver module (30, 40), which is configured for wireless communication and/or for wire-bound communication.

6. Aircraft seat control unit according to any one of the preceding claims, **characterized in that** the communication circuit unit (24) and the function circuit unit (14) are accommodated in a common housing (34).

7. Aircraft seat control unit according to any one of the preceding claims, **characterized in that** an operating program (38) which runs on the communication circuit unit (24) is realized as an untrustworthy operating program and is in particular certified according to DAL E.

8. Method for operating an aircraft seat control unit
having an operating program (36), which runs on a function circuit unit (14), for controlling the aircraft seat (10),
and having an operating program (38) which runs on a communication circuit unit (24) and is configured for external communication,
**characterized in that** the operating program (36) which runs on the function circuit unit (14) has a monitoring function which monitors the operating program (38), which runs on the communication circuit unit (24), and/or monitors communication between the function circuit unit (14) and the communication circuit unit (24).

9. Method for operating an aircraft seat control unit according to claim 8, **characterized in that** the operating program (36) which runs on the function circuit unit (14) is configured, in the event of a detected error or a detected manipulation, to terminate the operating program (38) which runs on the communication circuit unit (24) or to terminate communication between the function circuit unit (14) and the communication circuit unit (24).

10. Computer program
comprising commands which, upon the execution of the program by a computer, make said computer execute the method/the steps of the method according to claim 8 or 9.

## Revendications

1. Unité de commande de siège d'avion pour un siège d'avion (10),
avec une unité de circuit fonctionnel (14) comprenant au moins un circuit fonctionnel (16, 18, 20, 22) pour la commande du siège d'avion (10),
et avec une unité de circuit de communication (24) comprenant au moins un circuit de communication (28) et prévue pour la communication avec au moins une unité de commande externe (26),
**caractérisée en ce que** l'unité de circuit de communication (24) est réalisée au moins en technique logicielle séparément de l'unité de circuit fonctionnel (14), et l'unité de circuit fonctionnel (14) est prévue pour surveiller l'unité de circuit de communication (24).

2. Unité de commande de siège d'avion selon la revendication 1,
**caractérisée en ce que** l'unité de circuit fonctionnel (14) est prévue pour surveiller une interface de communication (32) entre l'unité de circuit fonctionnel (14) et l'unité de circuit de communication (24).

3. Unité de commande de siège d'avion selon l'une quelconque des revendications précédentes,
**caractérisée en ce que** l'unité de circuit fonctionnel (14) est prévue, en cas d'une manipulation détectée de l'unité de circuit de communication (24) ou de l'interface de communication (32), pour au moins partiellement déconnecter l'unité de circuit de communication (24) et/ou pour empêcher un échange de données entre l'unité de circuit de communication (24) et l'unité de circuit fonctionnel (14) par le biais de l'interface de communication (32).

4. Unité de commande de siège d'avion selon la revendication 1 ou 2, **caractérisée en ce que** l'unité de circuit de communication (24) est réalisée sous forme de carte réalisée séparément de l'unité de circuit fonctionnel (14), ladite carte étant reliée directement à l'unité de circuit fonctionnel (14) par le biais d'un bus.

5. Unité de commande de siège d'avion selon l'une quelconque des revendications précédentes,
**caractérisée en ce que** l'unité de circuit de communication (24) comprend au moins un module d'émission et/ou de réception (30, 40) prévu pour une communication sans fil et/ou pour une communication filaire.

6. Unité de commande de siège d'avion selon l'une quelconque des revendications précédentes,
**caractérisée en ce que** l'unité de circuit de communication (24) et l'unité de circuit fonctionnel (14) sont logées dans un boîtier commun (34).

7. Unité de commande de siège d'avion selon l'une quelconque des revendications précédentes,
**caractérisée en ce qu'**un programme d'exploitation (38) s'exécutant sur l'unité de circuit de communication (24) est réalisé sous forme de programme d'exploitation non fiable et est en particulier certifié selon la norme DAL E.

8. Procédé de fonctionnement d'une unité de commande de siège d'avion,
avec un programme d'exploitation (36) s'exécutant sur une unité de circuit fonctionnel (14) pour la commande du siège d'avion (10)
et avec un programme d'exploitation (38) s'exécutant sur une unité de circuit de communication (24) et est prévu pour une communication externe,
**caractérisé en ce que** le programme d'exploitation (36) s'exécutant sur l'unité de circuit fonctionnel (14) comprend une fonction de surveillance qui surveille le programme d'exploitation (38) s'exécutant sur l'unité de circuit de communication (24) et/ou surveille une communication entre l'unité de circuit fonctionnel (14) et l'unité de circuit de communication (24).

9. Procédé de fonctionnement d'une unité de commande de siège d'avion selon la revendication 8,
**caractérisé en ce que** le programme d'exploitation (36) s'exécutant sur l'unité de circuit fonctionnel (14) est prévu, en cas d'une erreur détectée ou d'une manipulation détectée, pour mettre fin au programme d'exploitation (38) s'exécutant sur l'unité de circuit de communication (24) ou pour mettre fin à une communication entre l'unité de circuit fonctionnel (14) et l'unité de circuit de communication (24).

10. Programme d'ordinateur,
comprenant des instructions qui, lors de l'exécution du programme par un ordinateur, amènent celui-ci à exécuter le procédé/les étapes du procédé selon la revendication 8 ou 9.
